# EUROPÄISCHE PATENTANMELDUNG

(11) **EP 1 930 143 A2**
(43) Veröffentlichungstag der Anmeldung: **11.06.2008**
(21) Anmeldenummer: 07023571.8
(22) Anmeldetag: 05.12.2007
(51) Int. Cl.: B29B 9/06, B29C 47/30, B29C 47/92

(54) **Düsenkopf für Kunststoffstanggranulieranlage**

(30) Priorität: 05.12.2006 DE 202006018456 U
(71) Anmelder: C. F. Scheer & Cie. GmbH & Co., 70435 Stuttgart (DE)
(72) Erfinder: Kreuz, Ulrich, 71729 Erdmannhausen (DE)
(74) Vertreter: Klunker . Schmitt-Nilson . Hirsch

(57) **Zusammenfassung**

Die Erfindung betrifft einen Düsenkopf (10) für eine Kunststoffstranggranulieranlage. Der Düsenkopf (10) umfasst eine Schmelzeeintrittsöffnung (20) zum Aufnehmen von Schmelze aus einem Extruder und einen Schmelzeverteiler (30) zum Verteilen von Schmelze von der Schmelzeeintrittsöffnung (20) auf eine Mehrzahl von Schmelzeleitkanälen (40) mit sich zu einem Ende hin öffnenden Düsen (41) zum Austreten von schmelzflüssigen Kunststoffsträngen. Dabei besitzt der Düsenkopf eine Mehrzahl von zwischen der Schmelzeeintrittsöffnung (20) und den Düsen (41) angeordneten Engstellen (100) für den Durchfluss von Schmelze, die in ihrem Querschnitt variabel und individuell einstellbar sind. Auf diese Weise wird es möglich, durch individuelle Fließwiderstandsänderung den in die Schmelzeleitkanäle (40) strömenden Schmelzefluss vor dem Austritt an jeder der Düsen (41) derart zu korrigieren, dass aus jeder Düse (41) der gleiche Massestrom an schmelzflüssigem Kunststoff austritt und die so erzeugten Stränge den gleichen Durchmesser aufweisen. Die Erfindung betrifft weiterhin eine Kunststoffstranggranulieranlage mit einem derartigen Düsenkopf (10).

## Beschreibung

Die Erfindung betrifft einen Düsenkopf einer Kunststoffstranggranulieranlage nach dem Oberbegriff des Schutzanspruchs 1 sowie eine Kunststoffstranggranulieranlage mit einem solchen Düsenkopf.

Der Düsenkopf dient dazu, aus einem Extruder austretende Kunststoffschmelze in eine Vielzahl von Kunststoffstränge aufzuteilen. Der Düsenkopf sitzt dementsprechend vor dem Austrittsende des Extruders. Mittels eines Schmelzeverteilers im Düsenkopf wird der schmelzflüssige Kunststoff vom Extruderaustritt auf Schmelzeleitkanäle verteilt, die in Düsen enden, aus denen der Kunststoff dann in Form von schmelzflüssigen Kunststoffsträngen austritt. Durch eine den Düsen nachgeordnete Kühlstrecke, in der die schmelzflüssigen Kunststoffstränge erstarren, werden die Stränge einem Granulator zugeleitet, wo sie dann granuliert werden.

Es ist ein Bestreben, den Düsenkopf so auszubilden, dass durch alle Düsen die gleiche Masse schmelzflüssigen Kunststoffs austritt, um dadurch Stränge mit gleichem Durchmesser zu erzeugen. Ungleiche Durchmesser der erzeugten Stränge führen beim Einleiten derselben in den Granulator dazu, dass bei im Vergleich zum gewünschten Durchmesser kleinerem Durchmesser der Stränge Schlupf zwischen den Strängen auftritt. Bei größeren Durchmessern hingegen kommt es zu Stauungen im Granulator. Beide Szenarien führen zu einer erheblichen Verschlechterung der Qualität des erzeugten Granulats.

Die Gleichmäßigkeit des Schmelzedurchsatzes durch die Düsen des Düsenkopfes wird von den thermischen und rheologischen Bedingungen im Düsenkopf beeinflusst. Im Stand der Technik ist es einerseits bekannt, den Düsenkopf zu beheizen, um gleichmäßige thermische Bedingungen zu schaffen. In der Regel geschieht dies elektrisch oder fluidisch, beispielsweise mittels eines Wärmeträgeröls oder mit Dampf. Auf diese Weise kann einer vorzeitigen oder lokalen Abkühlung des eingeleiteten schmelzflüssigen Kunststoffs mit einer daraus resultierenden Veränderung der Fließeigenschaften entgegengetreten werden.

Andererseits hilft das Konstanthalten der Temperatur nur so lange, wie derselbe Materialtyp verwendet wird. Andere Materialtypen können bei derselben Temperatur ganz andere rheologische Eigenschaften aufweisen. Daher ist es notwendig, durch eine spezielle geometrische Ausgestaltung des Schmelzeverteilers und der Schmelzeleitkanäle mit ihren Düsen nahezu gleiche Fließbedingungen an allen Düsenaustrittsstellen herzustellen. Nachteilig an einer Lösung dieser Art ist es, dass eine geometrische Ausgestaltung eines Düsenkopfes stets nur an das spezielle Fließverhalten eines bestimmten Materials angepasst werden kann. Somit erfordern verschiedene Kunststoffe oder allgemein geänderte Produktionsbedingungen, wegen der daraus resultierenden unterschiedlichen Fließeigenschaften, unterschiedliche Düsenköpfe.

Aufgabe der vorliegenden Erfindung ist es, einen Düsenkopf für eine Kunststoffstranggranulieranlage zur Verfügung zu stellen, der ein Erzeugen von Kunststoffsträngen gleichen Durchmessers, insbesondere auch bei der Verarbeitung unterschiedlicher Kunststoffe, erlaubt.

Diese Aufgabe wird durch einen Düsenkopf mit den Merkmalen des Schutzanspruchs 1 gelöst. In davon abhängigen Ansprüchen werden vorteilhafte Ausgestaltungen und Weiterbildungen der Erfindung angegeben.

Die Erfindung basiert auf der Idee, auf einen schmelzflüssigen Kunststoffstrom im Düsenkopf durch gezielte, variable Veränderung des Fließwiderstandes im Schmelzeverteiler oder vor den Düsen korrigierend so einzuwirken, dass sich ein gleichmäßiger Masseaustritt an allen Düsen einstellt.

Demgemäß umfasst ein erfindungsgemäßer Düsenkopf eine Schmelzeeintrittsöffnung zum Aufnehmen von Schmelze aus einem Extruder und einen Schmelzeverteiler zum Verteilen von Schmelze von der Schmelzeeintrittsöffnung auf eine Mehrzahl von Schmelzeleitkanälen mit sich zu einem Ende hin öffnenden Düsen zum Austreten von schmelzflüssigen Kunststoffsträngen, wobei im Gegensatz zum Stand der Technik der erfindungsgemäße Düsenkopf eine Mehrzahl von zwischen der Schmelzeeintrittsöffnung und den Düsen angeordneten Engstellen für den Durchfluss von Schmelze besitzt, die in ihrem Querschnitt variabel und individuell einstellbar sind. Auf diese Weise wird es möglich, durch individuelle Fließwiderstandsänderung den von der Schmelzeeintrittsöffnung über den Schmelzeverteiler in die Schmelzeleitkanäle strömenden Schmelzefluss vor dem Austritt an jeder der Düsen zu korrigieren. Die Änderung des Fließwiderstandes kann sowohl lokal als auch größenordnungsmäßig präzise gesteuert werden. Dies erlaubt es, den Strom schmelzflüssigen Kunststoffs in dem Düsenkopf so zu beeinflussen, dass aus jeder Düse der gleiche Massestrom an schmelzflüssigem Kunststoff austritt und die so erzeugten Stränge den gleichen Durchmesser aufweisen. Weiterhin ist die Möglichkeit gegeben, den Düsenkopf variabel an unterschiedliche Produktionsbedingungen anzupassen, insbesondere an die Verarbeitung verschiedener Kunststoffe.

In einer bevorzugten Ausführungsform sind die Engstellen durch eine Mehrzahl von einzelnen, voneinander unabhängig einstellbaren Elementen gebildet, die in den Schmelzeverteiler oder in die Schmelzeleitkanäle hinein- und daraus herausbewegbar sind. Dadurch kann jeweils lokal begrenzt und in verschiedenem Ausmaß der Durchflussquerschnitt für Schmelze im Schmelzeverteiler oder den Schmelzeleitkanälen verändert werden. Eine solche Ausgestaltung ist technisch einfach und kostengünstig zu realisieren.

Bevorzugt sind die einstellbaren Engstellen quer zur Schmelzeleitrichtung angeordnet. In einer solchen Anordnung sind die unterschiedlichen Fließeigenschaften des Schmelzestroms am einfachsten in der gewünschten Weise zu beeinflussen. Die einstellbaren Engstellen können vor den Schmelzeleitkanälen in einem Spalt des Schmelzeverteilers angeordnet sein, von dem die Schmelzeleitkanäle ausgehen. Eine Anordnung an dieser Stelle erlaubt eine Korrektur des Kunststoffmassestroms vor dessen Eintritt in die Schmelzeleitkanäle. Auch eine Anordnung der Engstellen unmittelbar in den Schmelzeleitkanälen, also jeweils zwischen einem Anfang eines Schmelzeleitkanals und einer dazugehörigen Düse ist möglich. Dadurch kann der Fließwiderstand des Stroms präzise innerhalb eines jeden Schmelzeleitkanals kurz vor dem Austritt des Kunststoffs aus der Düse als schmelzflüssiger Kunststoffstrang beeinflusst werden.

Vorzugsweise umfasst der Düsenkopf eine Antriebseinrichtung, um die Einstellung der Engstellen durchzuführen. In der Ausführungsform mit den in die Engstellen hinein- und herausbewegbaren Elementen ist die Antriebseinrichtung beispielsweise eingerichtet, das Hinein- und Herausbewegen der Elemente in bzw. aus dem Schmelzestrom durchzuführen. Die Antriebseinrichtung kann manuell steuerbar sein, oder aber vorzugsweise automatisch mittels einer Steuereinrichtung geregelt werden.

Eine Sensoreinrichtung zum Messen von Durchmessern von aus den Düsen austretenden schmelzflüssigen Kunststoffsträngen kann vorgesehen sein, um die Steuerung oder Regelung der Einstellung der Engstellen zu unterstützen, indem abhängig von den von der Sensoreinrichtung gemessenen Durchmessern die Antriebseinrichtung zum Einstellen der Engstellen betätigt wird. Auf diese Weise kann eine Anpassung der Engstellen auch während des laufenden Betriebs der Kunststoffgranulieranlage und im Falle der automatischen Regelung ohne Einwirkung von Bedienpersonal erfolgen, um beispielsweise kleine auftretende Unregelmäßigkeiten aufgrund von Temperaturschwankungen am Aufstellort der Kunststoffgranulieranlage auszugleichen.

Die Erfindung wird nachfolgend mit Bezug auf die begleitenden Zeichnungen beispielhaft beschrieben. Darin zeigen:
- Figur 1: eine bevorzugte Ausführungsform eines erfindungsgemäßen Düsenkopfes in Draufsicht; und
- Figur 2: einen Längsschnitt des Düsenkopfes aus Figur 1 entlang der Linie II-II.

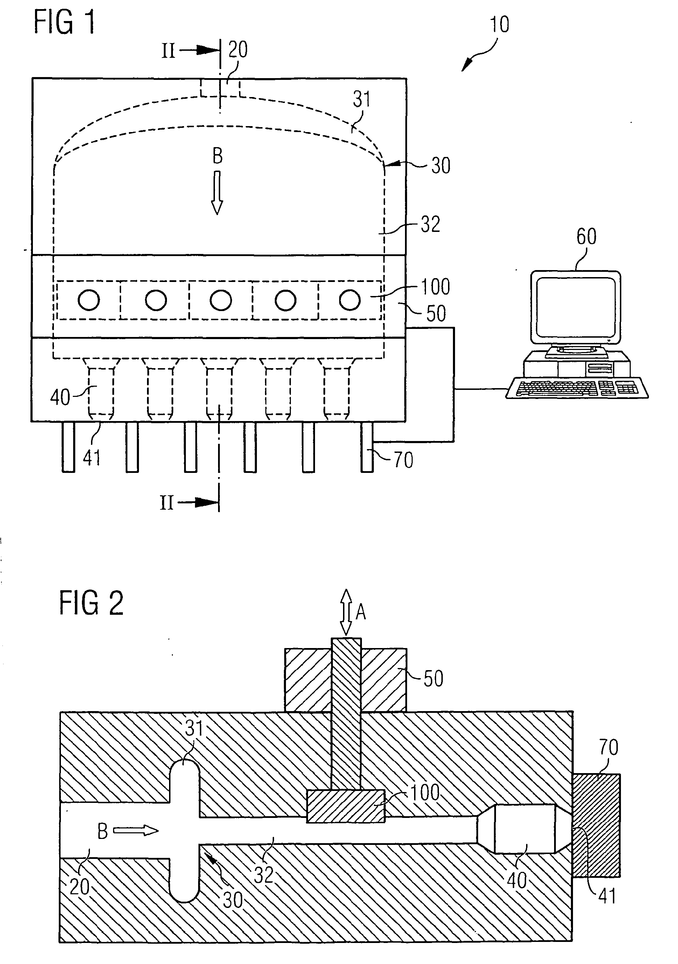

Figur 1 zeigt einen Düsenkopf 10 in Frontansicht und Figur 2 zeigt denselben Düsenkopf als seitlichen Längsschnitt. Er besitzt eine Schmelzeeintrittsöffnung 20 zum Aufnehmen von Schmelze aus einem Extruder (nicht gezeigt), einen Schmelzeverteiler 30, der sich in der in den Figuren dargestellten Ausführungsform aus einem Verteilerkanal 31 und einem spaltförmigen Staubereich 32 zusammensetzt, und Schmelzeleitkanäle 40 mit Düsen 41, die sich in Schmelzeleitrichtung B an den Staubereich 32 anschließen. Der Verteilerkanal 31 und der Staubereich 32 sind dabei derart ausgebildet, dass die durch die Schmelzeeintrittsöffnung 20 aufgenommene schmelzflüssige Kunststoffmasse möglichst gleichmäßig über die gesamte Breite des den Staubereich 32 bildenden Spalts des Verteilers 30 verteilt wird, um als gleichmäßig fließender Massestrom am Ende des Spalts von den Schmelzeleitkanälen 40 aufgenommen zu werden und als schmelzflüssige Kunststoffstränge aus den Düsen 41 auszutreten.

Variabel einstellbare individuelle Engstellen sind vorgesehen, um den Fließwiderstand des Schmelzestroms in dem Düsenkopf 10 lokal begrenzt zu korrigieren. Die Engstellen sind in der gezeigten Ausführungsform mittels einzelner, unabhängig voneinander einstellbarer Schieberelemente 100 ausgebildet, die in den Spalt des Staubereichs 32 hinein- und daraus herausbewegbar sind, wie es durch den Pfeil A angedeutet ist. Andere Arten zur Bildung der einstellbaren Engstellen, insbesondere andere Arten von beweglichen Elementen 100, liegen im Rahmen der Erfindung.

Durch die Schieberelemente wird jeweils lokal begrenzt und in definiert einstellbarem Ausmaß der Durchflussquerschnitt für Schmelze in dem Staubereich 32 variabel verändert. Es ist auch möglich, alternativ und/oder zusätzliche Schieberelemente 100 derart anzuordnen, dass sie statt in den Staubereich 32 in die Schmelzeleitkanäle 40 hinein- und daraus herausbewegbar sind, d.h. die Elemente in Schmelzeleitrichtung B zwischen dem Anfang eines Kanals 40 und der dazugehörigen Düse 41 anzuordnen. Die Elemente 100 sind quer zur Schmelzeleitrichtung angeordnet. Es ist möglich, andere Orientierungen für die Anordnung zu wählen.

Eine nur schematisch angedeutete Antriebseinrichtung 50 ist vorgesehen, das Hinein- und Herausführen der Elemente 100 in den Staubereich 32 oder, in einer nicht gezeigten Ausführungsform, in die Kanäle 40 durchzuführen. Als Antriebseinrichtung 50 können beliebige Stellantriebe dienen. Die Antriebseinrichtung 50 kann manuell eingestellt werden, beispielsweise mittels mechanischer Stellschlüssel oder, wie in der Ausführungsform in den Zeichnungen, mittels einer in Figur 1 schematisch angedeuteten Steuereinrichtung 60, die mit der Antriebseinrichtung 50 gekoppelt ist. Die Steuereinrichtung 60 kann als Personal Computer ausgebildet sein und noch weitere Steuerungsaufgaben übernehmen, beispielsweise im Zusammenhang mit einer eventuellen Beheizung des Düsenkopfes.

Mittels eine Sensoreinrichtung 70, die an einer Austrittsstelle der schmelzflüssigen Kunststoffstränge bei den Düsen 41 des Düsenkopfes 10 angeordnet ist, lässt sich der Durchmesser der austretenden Stränge messen. Abhängig von derart gemessenen Durchmessern kann die Steuereinrichtung 60, die mit der Sensoreinrichtung 70 gekoppelt ist, die Antriebseinrichtung 50 zur Einstellung der Elemente 100 automatisch so regeln, dass ein voreingestellter Strangdurchmesser über alle Stränge konstant gehalten wird. Statt einer automatischen Regelung kann die Sensoreinrichtung 70 auch lediglich dem Bedienpersonal als Überwachungshilfe dienen, so dass das Bedienpersonal bei einer Abweichung vom gewünschten Strangdurchmesser die Schieberelemente 100 mittels der Antriebseinrichtung 50, gegebenenfalls unter Verwendung der Steuereinheit 60, manuell einstellt.

## Patentansprüche

1. Düsenkopf (10) für eine Kunststoffstranggranulieranlage, umfassend eine Schmelzeeintrittsöffnung (20) zum Aufnehmen von Schmelze aus einem Extruder und einen Schmelzeverteiler (30) zum Verteilen von Schmelze von der Schmelzeeintrittsöffnung (20) auf eine Mehrzahl von Schmelzeleitkanälen (40) mit sich zu einem Ende hin öffnenden Düsen (41) zum Austreten von schmelzflüssigen Kunststoffsträngen, **gekennzeichnet durch** eine Mehrzahl von zwischen der Schmelzeeintrittsöffnung und den Düsen angeordneten Engstellen (100) für den Durchfluss von Schmelze, deren Querschnitt variabel und individuell einstellbar ist.

2. Düsenkopf (10) nach Anspruch 1, **dadurch gekennzeichnet, dass** die Engstellen (100) eine Mehrzahl von einzelnen, voneinander unabhängig einstellbaren Elementen (100) umfassen, die in den Schmelzeverteiler (30) oder in die Schmelzeleitkanäle (40) hinein- und daraus herausbewegbar sind.

3. Düsenkopf (10) gemäß Anspruch 1 oder 2, **dadurch gekennzeichnet, dass** die Engstellen (100) quer zur Schmelzeleitrichtung (B) angeordnet sind.

4. Düsenkopf (10) gemäß einem der Ansprüche 1 bis 3, **dadurch gekennzeichnet, dass** die Engstellen (100) in Schmelzeleitrichtung (B) vor den Schmelzeleitkanälen (40) in einem Spalt (32) des Schmelzeverteilers (30) angeordnet sind, von dem die Schmelzeleitkanäle (40) ausgehen.

5. Düsenkopf (10) gemäß einem der Ansprüche 1 bis 3, **dadurch gekennzeichnet, dass** die Engstellen (100) in Schmelzeleitrichtung (B) jeweils zwischen dem Anfang eines Schmelzeleitkanals (40) und einer dazugehörigen Düse (41) angeordnet sind.

6. Düsenkopf (10) gemäß einem der Ansprüche 1 bis 5, **gekennzeichnet durch** eine Antriebseinrichtung (50), mittels der die Einstellung der Engstellen (100) durchführbar sind.

7. Düsenkopf (10) gemäß Anspruch 6, **dadurch gekennzeichnet, dass** die Antriebseinrichtung (50) manuell bedienbar ist.

8. Düsenkopf (10) gemäß Anspruch 6 oder 7, **gekennzeichnet durch** eine Steuereinrichtung (60), mittels der die Antriebseinrichtung (50) automatisch steuerbar ist.

9. Düsenkopf (10) gemäß einem der Ansprüche 1 bis 8, **gekennzeichnet durch** eine Sensoreinrichtung (70), die im Betrieb Durchmesser von aus den Düsen (41) austretenden schmelzflüssigen Kunststoffsträngen misst.

10. Düsenkopf (10) gemäß Anspruch 8 oder 9, **dadurch gekennzeichnet, dass** die Steuereinrichtung (60) eingerichtet ist, die Antriebseinrichtung (50) im Betrieb abhängig von den von der Sensoreinrichtung (70) gemessenen Durchmessern der schmelzflüssigen Kunststoffstränge zu regeln.

11. Kunststoffstranggranulieranlage, umfassend einen Extruder mit einem Düsenkopf (10) gemäß einem der Ansprüche 1 bis 10, eine Kühlstrecke zum Abkühlen von aus den Düsen (41) des Düsenkopfes schmelzflüssig austretenden Kunststoffsträngen und, der Kühlstrecke nachgeordnet, einen Granulator zum Granulieren der abgekühlten Kunststoffstränge.
